## Europäisches Patentamt

## European Patent Office

## Office européen des brevets

(11) Publication number: **0 188 388**
**B1**

## EUROPEAN PATENT SPECIFICATION

(45) Date of publication of patent specification: **11.07.90**

(51) Int. Cl.⁵: **C 01 F 7/02**

(21) Application number: **86300319.0**

(22) Date of filing: **17.01.86**

(54) Alpha-alumina particles, and process for preparing the same.

(30) Priority: **18.01.85 IT 1914285**

(43) Date of publication of application:
**23.07.86 Bulletin 86/30**

(45) Publication of the grant of the patent:
**11.07.90 Bulletin 90/28**

(84) Designated Contracting States:
**BE CH DE FR IT LI NL SE**

(56) References cited:
CHEMICAL ABSTRACTS, vol. 82, no. 10, 10th
March 1975, page 395, column 2, abstract no.
63445n, Columbus, Ohio, US; K. HAMOND et
al.: "Preparation of spherical alumina particles
by means of a plasma flame and their
characteristics", & YOGYO KYOKAI SHI 1974,
82(11), 611-617

(73) Proprietor: **Montedison S.p.A.**
**31, Foro Buonaparte**
**I-20121 Milan (IT)**

(72) Inventor: **Mello Ceresa, Emiliano**
**67, via Milano**
**I-13069 Vigliano Biellese Vercelli (IT)**
Inventor: **Gennaro, Antonio**
**5, via Giovanni XXIII**
**I-28062 Cameri Novara (IT)**
Inventor: **Cortesi, Paolo**
**47/14, via Cappuccini**
**I-10034 Chivasso Torino (IT)**

(74) Representative: **Whalley, Kevin et al**
**MARKS & CLERK 57/60 Lincoln's Inn Fields**
**London WC2A 3LS (GB)**

(56) References cited:
CHEMICAL ABSTRACTS, vol. 83, no. 14, 6th
October 1975, page 377, column 1, abstract no.
120040y, Columbus, Ohio, US; L. STEVULA et
al.: "Spheroidization of powder alpha-
aluminium oxide", & SILIKATY 1975, 19(2),
117-122

Courier Press, Leamington Spa, England.

(56) References cited:

JOURNAL OF INORGANIC NUCLEAR CHEMISTRY, vol. 35, 1973, pages 3691-3705, Pergamon, London, GB; R. BRACE et al.: "Aluminium hydrous oxide sols-I, spherical particles of narrow size distribution"

JOURNAL OF THE AMERICAN CERAMIC SOCIETY, vol. 68, no. 7, 1985, pages C-163-C-164, Columbus, Ohio, US; D.S. TUCKER "Gamma-to-alpha transformation in spherical aluminium oxide powders"

## Description

This invention relates to alpha-alumina particles, particularly spherical non-aggregated particles of alpha-alumina, and to a process for preparing the same.

More particularly, the invention relates to alpha-alumina consisting essentially of spherical, non-aggregated, monodispersed or polydispersed particles having a low polydispersion index and a number average diameter ranging from 0.06 μm to 2 μm.

Alpha-alumina has a wide range of uses: for example, as a material for electronics, in the preparation of substrates for semi-conductors or in the packing of integrated circuits; as ceramic material in particular for the manufacture of cutting devices, of blades for turbines, of tubes for sodium vapour lamps, and of synthetic gems; or as a catalyst or as a catalyst carrier in heterogeneous catalysis.

The ceramic materials prepared with alpha-alumina are very interesting owing to their mechanical properties, thermal conductivity and dielectric constant at high temperatures, so that they enable the preparation in particular of electrical and thermal insulating materials. The ceramic cutting tools obtained with alpha-alumina exhibit a very high hardness and are resistant to very high temperatures.

There are known various types of hydrated, amorphous or crystalline alumina, having a water content which can vary up to a maximum of about 35% by weight.

Several processes are available for preparing hydrated aluminas with a water content ranging from 15% to 35% by weight in the form of spherical, non-aggregated, monodispersed or polydispersed particles having a narrow size distribution and sizes below one micron or up to a few microns.

The abovesaid kinds of hydrated alumina can be subjected to thermal treatments in order to reduce the water content for obtaining gamma-alumina. Generally, the water content in these aluminas is about 2% by weight. The thermal treatments for preparing gamma-alumina are carried out at temperatures ranging from 550°C to 850°C during a few hours.

By the known calcination methods employed in the art it is possible to obtain gamma-alumina in the form of spherical particles, monodispersed or polydispersed with a low polydispersion index, having sizes below one micron or of a few microns and being non-aggregated, starting from precursors of hydrated alumina, in an amorphous or crystalline form, having the same morphological characteristics of the gamma-alumina to be prepared.

The gamma-alumina obtained exhibits a reduction in the particles diameter of about 10% as compared with the sizes of the precursor particles. During the thermal treatment for the formation of this crystalline phase, the specific surface area tends to increase until there is obtained a value of about 60 m²/g or higher. The porosity of the obtained gamma-alumina is higher than that of the starting precursor.

Thermal treatments for obtaining gamma-alumina with the morphological characteristics mentioned hereinbefore are described, for example, by E. Matijevic et al. in "Heterogeneous Atmospheric Chemistry Geophysical Monograph Series", vol. 26, pages 44—49 (1982).

Matijevic describes the preparation of spherical particles of hydrated, non-aggregated alumina, having a very narrow size distribution by reacting liquid drops of a monodispersed aerosol of aluminium sec. butoxide with water vapour. The spherical particles of hydrated alumina in the amorphous phase were then subjected to calcination during 8 hours at a temperature of 700°C, thus obtaining gamma-alumina having the same characteristics as the starting precursor, but with a reduction in the particle diameter of about 10%.

Another method of preparing spherical particles of gamma-alumina having a controlled morphology is described in Journal of Material Science 6 (1971), pages 218—224 "Preparation of Ultrafine Alumina Powders by Plasma Evaporation".

The gamma-alumina obtained by this preparation method contains small amounts of delta-alumina, another crystalline phase. From the photographs of the product obtained, which are shown in the article, it is possible to observe, however, that the particles exhibit a high degree of agglomeration, which renders the mixtures of these alumina phases so prepared little utilizable in practice.

From the technical and patent literature there are known thermal treatments for transforming precursors of hydrated alumina, amorphous or crystalline, or of gamma-alumina into other alumina crystalline phases, such as delta-alumina, teta-alumina and eta-alumina, or mixtures thereof, by operating at temperatures higher than 850°C up to about 1100°C. The products obtained from such crystalline transformations, however, tend to aggregate and are polydispersed with a high polydispersion index.

From the prior art there are also known thermal treatments for preparing alpha-alumina by subjecting the precursors to temperatures higher than 1100°C. However, an alpha-alumina in the form of spherical particles free from aggregated or sintered particles, monodispersed or polydispersed with a polydispersion index, has never been obtained by operating according to the known thermal treatments.

By subjecting to calcination at temperatures higher than 1100°C the precursors of hydrated, amorphous or crystalline alumina in the form of spherical, non-aggregated particles, monodispersed or polydispersed with a low polydispersion index, it is possible to cause the conversion of alumina to the alpha-crystalline phase, but the particles do not retain the morphology and the monodispersion or polydispersion of the starting precursor because they tend to break, to sinter or to aggregate with one another.

3

In the article "Preparation and Sintering Behaviour of Fine Grains $Al_2O_3$-$SiO_2$ Composite" by P. E. Debely, E. A. Barringer and H. Kenkt Bowen, published on occasion of the 37th Pacific Coast Regional Meeting, Am. Cerm. Soc., on October 30, 1984, it is explicitly set forth that there is no method capable of producing alpha-alumina in the form of spherical, submicronic, monodispersed and non-agglomerated particles. The authors state that the control of the size of the spherical, monodispersed, non-aggregated particles of the starting hydrated alumina precursor is lost during the conversion to alpha-alumina.

The alpha-alumina prepared by means of the calcining processes known in the art does not retain the sphericity and morphology characteristics of the starting precursor. The analysis of commercially available samples obtained by classification through centrifugation reveals that alpha-alumina is in the form of non-spherical particles and that aggregates are present.

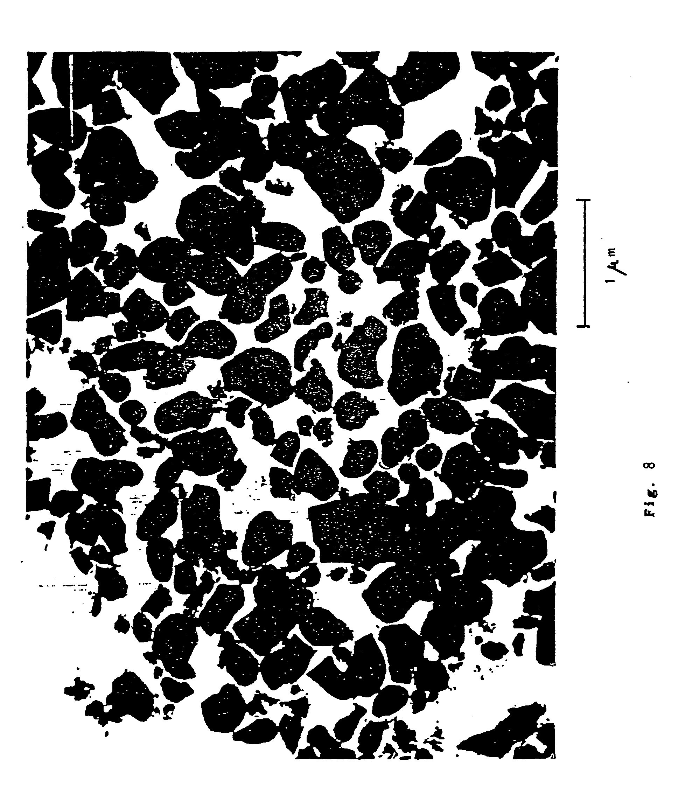

Figure 8 of the accompanying drawings shows, as an example, a photograph obtained by a transmission electron microscope (TEM) of a commercial alpha-alumina product.

There is a high requirement for alpha-alumina in the form of spherical, non-aggregated particles, monodispersed or polydispersed with a low polydispersion index, for achieving a further improvement in the mechanical, thermal and electric properties of the materials prepared by using alpha-alumina as described hereinbefore.

The term "monodispersed particles" as used herein means particles of alpha-alumina having a polydispersion index dw/dn less than or equal to 1.20, in which dw is the weight average diameter of the particles and dn is the number average diameter.

The term "polydispersed alpha-alumina" means particles having a ratio dw/dn less than or equal to 2; in particular, when dw/dn is less than or equal to 1.30, the particles are considered to have a low polydispersion index.

It has now surprisingly been found that it is possible to prepare alpha-alumina consisting essentially of spherical, polydispersed, non-aggregated particles, in particular monodispersed or polydispersed particles having a low polydispersion index (dw/dn is less than or equal to 1.30).

It has further been found possible to provide by means of the present invention mixtures of alpha-alumina with teta- and/or delta-alumina having a high alpha-alumina content greater than or equal to 70% by weight consisting essentially of spherical particles having the granulometric characteristics described hereinbefore.

The present invention further aims to provide a process for preparing spherical particles of alpha-alumina, or mixtures thereof with teta- and/or delta-alumina, having the characteristics mentioned hereinabove, which permits a wide choice of the particles diameter, the desired diameter being obtainable in a very narrow size distribution range.

The present invention provides alpha-alumina consisting essentially of solid, spherical, non-aggregated particles having a number average diameter from 0.06 to 2 µm, a polydispersion index dw/dn less than or equal to 2.0 wherein dw is the weight average diameter and dn is the number average diameter, a total porosity of the micro/meso-type of less than 0.3 cc/g, a specific surface area of from 0.7 to 80 $m^2$/g, and an apparent density of the particles of from 3.2 to 3.94 g/$cm^3$.

In the above definition of the invention, the term "porosity of the micro type" means pores having a diameter below 20 Å, and the term "porosity of the meso type" means pores having a diameter from 20 to 500 Å, according to IUPAC 1972 classification.

The average sizes dw and dn as well as the morphological and granulometric characteristics are determined under an electron microscope according to the TEM technique. The method of determining dw and dn is described by E. A. Collins, J. A. Davidson and C. A. Daniels in "Review of Common Methods of Particles Size Measurement" Journal of Paint Technology, vol. 47, No. 604, May 1975.

The alpha-crystalline phase of alumina is determined by means of the X-ray diffraction pattern of the powders according to method J.C.P.D.S. No. 10-173. The apparent density of the particles is measured according to the Beckman Air Comparison Pycnometer method with helium.

Specific surface area and porosity are determined according to the dynamic BET method with nitrogen.

The preferred products of the invention have generally a number average diameter of from 0.1 to 1 µm and a polydispersion index of less than or equal to 1.30. More particularly, if the diameter is from 0.2 to 0.6 µm, the product is monodispersed, i.e. the polydispersion index is less than or equal to 1.20.

In particular it has been found that the alpha-alumina obtained according to this invention exhibits very low porosities of the micro/meso types, in particular less than 0.1 cc/g, or that it is even possible to obtain non-porous alpha-alumina, i.e. the porosity has a value of about zero.

This result is surprising since the gamma-alumina obtained by means of the thermal treatments described hereinbefore from hydrated alumina precursors exhibits an increased porosity as compared with the starting precursors. In fact it could be expected that the alpha-alumina, being obtained through thermal treatments carried out at temperatures higher than those required for obtaining gamma-alumina, should exhibit a higher porosity increase than the starting precursors.

It is thus notable that the properties of the materials preparable with the above-said alpha-alumina particles with very low porosities, or free from porosity, prove to be improved.

According to another aspect of the invention, the alpha-alumina is obtainable also in admixture with other crystalline phases, such as delta- and/or teta-alumina, such mixtures having an alpha-phase content of at least 70% by weight, the particles of the various phases forming the mixtures being spherical, non-aggregated, and monodispersed or polydispersed, as is defined hereinbefore. The determination of the delta- and teta-alumina crystalline phases is accomplished by means of the X-ray diffraction pattern of the powders according to method J.C.P.D.S. No. 16-394 and No. 11-517, respectively.

The alpha-alumina or the mixtures including alpha-alumina of the present invention are very pure, generally of the order of 99.98% by weight, in particular greater than or equal to 99.99% by weight.

A process for preparing the alpha-alumina particles, or mixtures thereof with delta- and/or teta-alumina, of the invention comprises subjecting to particular thermal treatments precursors consisting of hydrated alumina, amorphous or crystalline, with a water content up to about 35% by weight, or of gamma-alumina, or mixtures of the above said precursors.

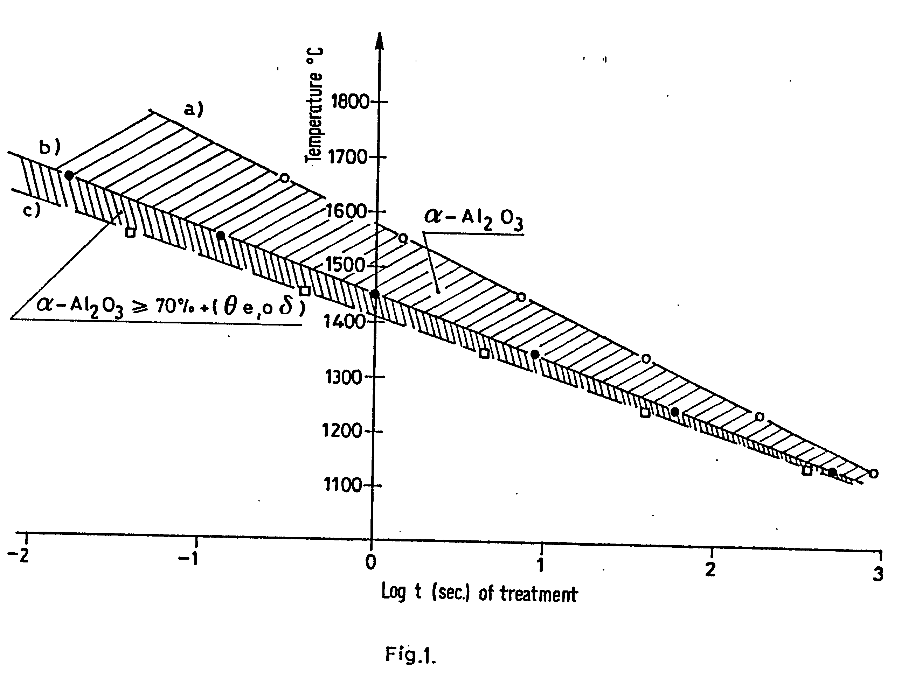

More particularly, the invention in another aspect provides a process for preparing the alpha-alumina particles of the invention, wherein an alpha-alumina precursor having a water content of from about 2% to about 35% by weight, in the form of spherical, non-aggregated particles, having a polydispersion index less than or equal to 2.0, and a number average diameter from 0.07 to 2.3 μm, is subjected to a thermal treatment by instantaneously bringing the precursor from a starting temperature comprised from room temperature to 850°C to a thermal treatment temperature comprised from 1130° to 1700°C, and for times, generally indicated for each temperature in Figure 1 of the accompanying drawings between straight lines (a) and (b), which are sufficient to convert the precursor to the alpha-phase, but not such as to cause disgregation and/or aggregation of the product, and by bringing the resulting product again to room temperature by means of a non-instantaneous cooling of the order of at least 10 seconds.

The thermal treatment time is strictly related to the temperature, which means that the higher the temperature, the shorter is the time required for the conversion of the precursor to the alpha form. Figure 1 of the accompanying drawings shows the time ranges utilizable for each temperature in the above-indicated range, wherein: straight line (b) has been drawn on the basis of the minimum thermal treatment time necessary to obtain alpha-alumina with the morphological characteristics stated hereinbefore, using a precursor consisting of particles having a number average diameter of 0.07 μm; and straight line (a) has been drawn on the basis of the maximum thermal treatment times for a precursor consisting of particles having a number average diameter of 2.3 μm. The abovesaid minimum and maximum times were determined for a meaningful number of temperatures in the range being considered. In fact, once the temperature has been fixed, the treatment time varies as a function of the precursor size. In particular, the greater then precursor size, the longer is the minimum time required for obtaining alpha-alumina having the characteristics stated hereinbefore; the time range, once a temperature has been fixed, is comprised between the upper straight line (a) and an intermediate straight line comprised between lines (a) and (b). In fact, if the process is operated with times shorter than those of the said intermediate straight line, complete conversion of the precursor to the alpha-phase does not take place. Conversely, if the process is started from precursors having lower particle diameters, the thermal treatment time, once a temperature has been fixed, is comprised between the straight line (b) and a straight line below the straight line (a). A person skilled in the art will be able, without any difficulty, to determine the intermediate straight line between straight lines (a) and (b) in order to obtain alpha-alumina with the characteristics of the invention.

In fact, when the process is operated for times higher than said intermediate straight line, the product tends to disaggregate or to aggregate.

Furthermore it has been found that, once the temperature of the thermal treatment has been fixed, the thermal treatment time varies as a function of the precursor utilized.

If amorphous hydrated alumina is utilized as a precursor, the thermal treatment time is always comprised between straight lines (a) and (b) and varies as a function of the particle diameter as described hereinbefore, but it is proportionally higher than that of a precursor consisting of hydrated crystalline alumina or gamma-alumina.

Since such latter precursors have already undergone a thermal treatment for being obtained, they require a shorter time for being converted to the alpha-phase. Thus, Figure 1 generally indicates the ranges of the thermal treatment time—once a temperature has been fixed—which are employable for any precursor type and for any diameter of the precursor particles. Those skilled in the art will be able to easily determine the best values of the time range at a temperature fixed as a function of the variables described hereinbefore. As an example there are given below a few time ranges (t) at certain temperatures (T) as a function of number average diameters φ of precursors and for different types of precursor.

Hydrated amorphous alumina precursor in the form of spherical particles, having the morphological characteristics indicated hereinbefore:

for φ=0.37 μm:

| T (°C) | t |
|--------|---|
| 1150 | 7—10 (minutes) |
| 1350 | 12—18 (seconds); |

for φ=0.15 μm:

| T (°C) | t |
| --- | --- |
| 1150 | 6—8.5 (minutes) |
| 1350 | 8—15 (seconds) |

Gamma-alumina precursor:
for φ=0.28 μm:

| T (°C) | t |
| --- | --- |
| 1350 | 8—13 (seconds) |
| 1450 | 1—2 (seconds) |

In order to obtain alpha-alumina with the characteristics of the invention it is therefore necessary to carry out thermal treatments under the time and temperature conditions specified hereinbefore. However, the abovesaid conditions alone are not sufficient for obtaining the alpha-alumina of the invention.

In fact it has been found that in order to obtain alpha-alumina having the morphological and granulometric characteristics of the invention, it is necessary to carry out the thermal treatment by bringing the precursor from room temperature instantaneously to the treatment temperature.

It has been found that if the precursor powder is introduced into the system employed for the thermal treatment and if the treatment temperature is reached by using the conventional calcining methods according to non-instantaneous thermal increase diagrams, the results of the present invention cannot be achieved.

It is necessary that the apparatus utilized for the thermal treatment should be already regulated at the treatment temperatures and the precursor, at room temperature, should be introduced thereinto instantaneously.

In the case that gamma-alumina is to be employed as a precursor, if the gamma-alumina has been already performed and if it is at room temperature, there is carried out the procedure described above.

It is possible, however, to utilize directly the gamma-alumina obtained at temperature from 550° to 850°C by instantaneously introducing it, from such temperature, into a second thermal treatment apparatus which is already adjusted at the required temperature.

Similarly, it is possible to start from initial temperatures of the powders ranging from room temperature to the gamma-phase formation temperature, i.e. to formation temperatures of precursors comprising mixtures of gamma-alumina and crystalline hydrated alumina, and to instantaneously introduce the same into the thermal treatment system pre-adjusted at the desired temperature.

After the treatment at the desired temperature and for the above-indicated times has taken place, the powder must not be instantaneously brought back to room temperature, but a more or less quick cooling is required. The term "more or less quick cooling" whenever used in the present invention means a cooling of the order of a few seconds, generally at least 10 seconds.

It has been found that cooling of the powders for achieving the results of the present invention can be effected by extracting the powder from the thermal treatment system and then leaving it at room temperature.

By operating under the conditions specified hereinabove it is possible to obtain the alpha-alumina of the invention in an amount of 100% of the final product.

Nevertheless, mixtures of alpha-alumina containing delta- and/or teta-alumina, provided the alpha- content is at least 70% by weight, fall within the scope of the present invention.

These mixtures are obtainable either by operating between straight lines (a) and (b), provided the treatment time is not sufficient for the complete conversion to the alpha-phase as is described hereinbefore, or by operating in the plane area comprised between straight lines (b) and (c) in Figure 1. The thermal treatment of the invention can be accomplished by means of any system, for example it is possible to utilize static, rotary, and fluid bed furnaces.

The results attained with the process according to the invention are all the more surprising since the processes known in the art for preparing a gamma-alumina capable of retaining the morphological and granulometric characteristics of the precursors were carried on during long times so as to permit the precursors of hydrated alumina, amorphous or crystalline, to recrystallize under thermodynamic equilibrium conditions and, as a consequence, to permit a controlled phase conversion.

In this way, also the water loss from the precursors occurred in a controlled manner and the precursors retained their morphological characteristics during the phase-conversion.

It was therefore predictable that the process should be operated under thermodynamic equilibrium conditions also for converting alumina to the phase obtainable at higher temperatures.

Contrary to all expectations it has conversely been found that it is essential, in order to retain the morphology and particle size of the precursors, thus preventing any aggregation, sintering or disgregation phenomena, to carry out thermal treatments according to instantaneous thermal increase diagrams and for the short times as are generally indicated in Figure 1.

The cooling, at the end of the treatment as described hereinbefore, shall not be instantaneous, but shall last at least 10 seconds. As already stated, any precursor of alpha-alumina, or mixtures thereof, can be used for preparing the alpha-alumina of the present invention, provided it exhibits the abovesaid granulometric and morphological characteristics.

There are various processes known in the art for preparing the abovesaid precursors; for example there may be mentioned those which utilize the formation of aerosols, or the controlled homogeneous precipitation in aqueous solutions.

Among the methods which utilize the formation of aerosols, reference is made, for example, to the article by E. Matijevic cited above.

Another method based on the use of aerosols is described in European Patent Application No. EP—A—117,755 in the name of the present Applicants.

Among the methods which operate in solution, a process which has proved to be useful for the purposes of the invention is described in "Journal Inorg. Nucl. Chem. 1973, vol. 35, pages 3697—3705" by Roger Brace and Egon Matijevic, according to which hydrated alumina is prepared starting from aluminium sulphate solutions by forced hydrolysis at temperatures higher than 90°C, usually of the order of 100°C. According to this method, non-aggregated, monodispersed precursors in the form of spherical particles are obtainable by operating at concentrations in the range from $2.10^{-4}$ to $5.10^{-3}$ moles per liter of aluminium.

The precursors are characterized, as regards their morphological and granulometric characteristics, under an electron microscope by the TEM technique, as explained hereinbefore for alpha-alumina. The determination of the crystalline gamma phase is accomplished by means of the X-ray diffraction pattern of powders according to standard J.C.P.D.S. No. 14-425.

The invention will be further described with reference to the following illustrative Examples.

Example 1
Preparation of the precursor

Hydrated alumina $Al_2O_3 \cdot 3H_2O$ ($H_2O$ content corresponding to about 35% by weight) in amorphous phase, in the form of non-aggregated spherical particles having a number average diameter dn=0.16 μm and a polydispersion index dw/dn=1.19, was prepared via an aerosol according to Example 1 of published European Patent Application No. EP—A—117,755 with the variations described hereinafter.

Dry nitrogen was employed as carrier gas, and aluminium sec. butoxide was used as aluminium compound.

A dry nitrogen flow having a temperature of 155°C, a flowrate of 250 l/h (measured at room temperature), which carried 8.9 g/h of aluminium sec. butoxide in the form of vapour, was mixed with a second cold nitrogen flow having a temperature of 5°C and a flowrate of 500 l/h (measured at room temperature). The temperature at which the aerosol formed in the ejector was 55°C and the Reynolds number in the converging portion of the ejector was 2,200.

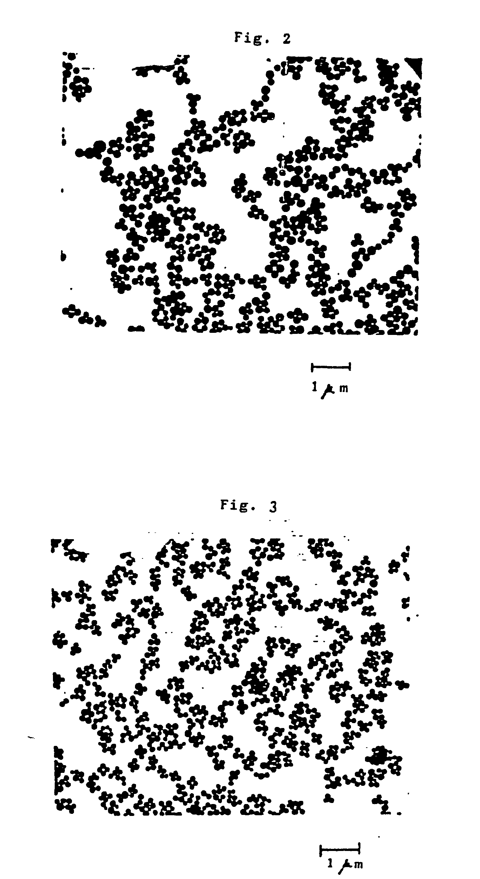

Figure 2 shows a photograph taken under a transmission electron microscope (TEM) of the obtained precursor particles having the above-indicated sizes. The magnification is 10,000 times.

The precursor particles were pefectly spherical, non-agglomerated and water-dispersible.

An X-ray pattern of the powder revealed that the hydrated alumina obtained was in the amorphous form.

Preparation of alpha-alumina

10 g of $Al_2O_3 \cdot 3H_2O$ obtained as specified above at room temperature were subjected to an instantaneous thermal treatment by introducing the powder into a horizontal furnace manufactured by Heraeus, already arranged at a temperature T of 1150°C. The powder was left at such temperature during a time of 8 minutes.

At the end of the treatment, the powder was brought again to room temperature by drawing out the sample from the furnace. The cooling time was of the order of a few minutes.

The resulting product exhibited the following characteristics:
— morphology: non-aggregated spherical particles;
— dn=0.12 μm;
— polydispersion index dw/dn=1.19;
— apparent density of the particles ($g/cm^3$)=3.30;
— specific surface area ($m^2/g$)=7;
— porosity (cc/g)=0.01.
The product purity was higher than 99.99%.

Figure 3 shows a photograph taken under an electron microscope (TEM) of the product obtained, at a magnification of 10,000 times.

The X-ray pattern of the powder of the product obtained revealed that the alumina was all in the alpha phase.

Comparative Example 1A

10 g of precursor $Al_2O_3 \cdot 3H_2O$ obtained in Example 1 were introduced into the furnace where the thermal treatment was carried out, at room temperature. Subsequently, the thermal treatment temperature indicated in Example 1 was reached in 6 hours, and the sample was left at such temperature for the time as indicated in Example 1.

Cooling of the powder was the same as in Example 1.

X-ray analysis (powder pattern) revealed that the product was all in the alpha form, but the particles did not retain the morphological and granulometric characteristics of the pre cursor.

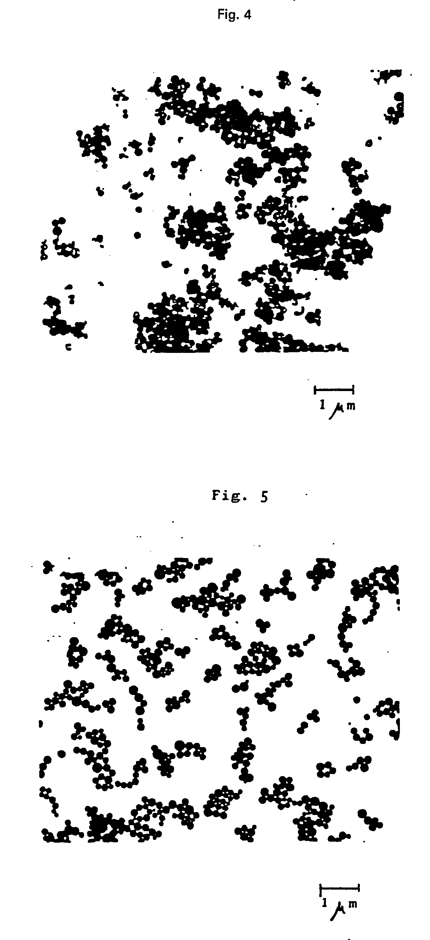

Figure 4 shows a photograph taken under a transmission electron microscope (TEM) of the product obtained. It is possible to observe that the particles are no longer spherical, tend to disgregate, and are affected by considerable aggregation and sintering phenomena.

From a comparison between Example 1 and Comparative Example 1A it is apparent that if the thermal increase of the powder from room temperature to the treatment temperature is not instantaneous, the morphological characteristics of the precursor are not maintained.

Comparative Example 1B

10 g of $Al_2O_3 \cdot 3H_2O$ obtained according to the process described in Example 1 were subjected to the same treatment as Example 1, but the treatment time was 2 minutes.

The X-ray pattern of the powders revealed that the product consisted of a mixture of delta-alumina and alpha-alumina (80% by weight of delta-alumina), and that the product retained the characteristics of the precursor.

Comparative Example 1B compared with Example 1 shows that only a partial conversion to alpha-alumina occurred.

### Comparative Example 1C

Comparative Example 1B was repeated, but the thermal treatment was carried on during a time of 1 minute.

Under X-ray analysis the product was found to be delta-alumina without any presence of alpha-phase.

The product retained the initial characteristics and a decrease of about 10% in the particles diameter dn was observed.

### Example 2

#### Preparation of the precursor

10 g of $Al_2O_3 \cdot 3H_2O$ prepared according to Example 1 were subjected to a thermal treatment at 800°C during a time of 4 hours, utilizing a 2-hour thermal increase diagram. After cooling down the powder was taken out from the furnace (the cooling time was a few minutes).

X-ray analysis (powder pattern) revealed that the product was gamma-alumina (water content: about 3% by weight).

Figure 5 shows a photograph taken under a transmission electron microscope (TEM) of the product obtained, at a magnification of 10,000 times.

The product retained the spherical and non-agglomeration characteristics of the precursor.

The product characteristics were as follows:
—dn=0.15 μm;
—polydispersion index dw/dn=1.2;
—apparent density of the particles=3.1 g/cm³;
—specific surface area=58 m²/g;
—porosity=0.10 cc/g.

#### Preparation of alpha-alumina

5 g of gamma-alumina so obtained at room temperature were subjected to the thermal treatment of Example 1.

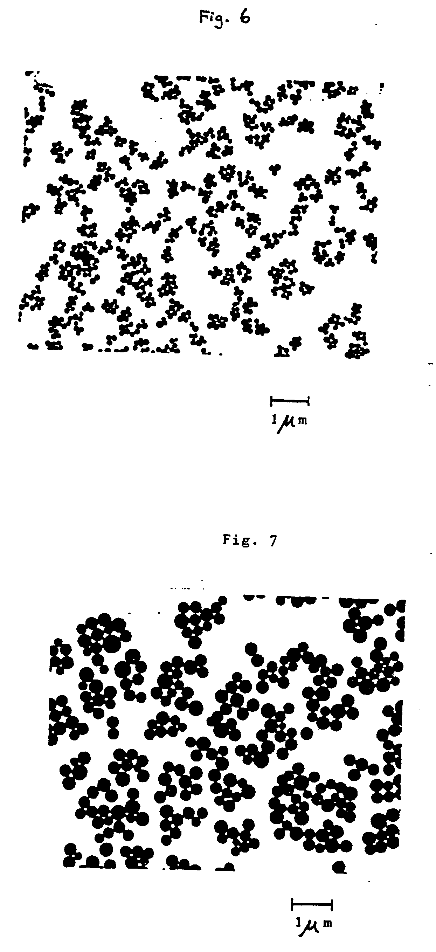

Figure 6 shows a photograph taken under a transmission electron microscope (TEM), at a magnification of 10,000 times. As is apparent from the photograph, the product retained the morphological characteristics of the precursor and no aggregates were present.

The product exhibited the following characteristics:
—dn=0.11 μm;
—polydispersion index dw/dn=1.2;
—porosity=0.01 cc/g;
—specific surface area=6.9 m²/g;
—apparent density of the particles =3.4 g/cm³;
—X-ray pattern of the powders: alpha-alumina.

### Comparative Example 2A

9 g of gamma-alumina obtained according to Example 2 were subjected to the thermal treatment of Comparative Example 1A. The resulting product revealed the same disgregation and aggregation phenomena of the particles as in Comparative Example 1A.

### Example 3

5 g of gamma-alumina obtained according to Example 2 at a temperature of 800°C were subjected to the thermal treatment indicated in Example 1. The product obtained was found to have characteristics similar to those described in Example 2.

### Example 4

Example 1 was repeated, but carrying out the thermal treatment at T=1350°C during a time of 10 seconds. The resulting product exhibited the same characteristics as in Example 1.

### Example 5

10 g of $Al_2O_3 \cdot 3H_2O$ having a number average diameter dn=0.32 μm and a polydispersion index dw/dn=1.17, in a spherical, non-aggregated form, were obtained via an aerosol, in the same manner as in Example 1, but under the following modified conditions: the dry nitrogen flowrate, at a temperature of 158°C, was 200 l/h; the gas carried 7.4 g/h of aluminium sec. butoxide; the second gaseous stream consisted of dry nitrogen at a temperature of 0°C and at a flowrate of 400 l/h; The Reynolds number was 1800.

The aerosol formation temperature was 53°C.

In the hydrolysis chamber the contact time was 57 seconds, and the ratio $H_2O$/Al sec. butoxide by moles was 8.

The treatment indicated in Example 3 was repeated.

The product obtained was alpha-alumina and exhibited the following characteristics:
—dn=0.28 μm;
—dw/dn=1.20;
—the product did not exhibit any porosity;
—specific surface area=4.8 m²/g;
—apparent density of the particles =3.4 g/cm³.

From the photograph shown in Figure 7, taken under a transmission electron microscope (TEM) at a magnification of 10,000 times, it is apparent that the product consists essentially of spherical, non-aggregated particles.

### Example 6

10 g of $Al_2O_3 \cdot 3H_2O$ in the form of spherical and non-aggregated particles having a number average dn=1.35 μm and a ratio dw/dn=1.15 were prepared according to the method described in Example 1 via an aerosol, by employing the following conditions:

the first gaseous stream at T=156°C, at a flowrate of 300 l/h, conveyed 10.7 g/hour of aluminium sec. butoxide;

the second gaseous stream had a temperature of 0°C and a flowrate of 300 l/h;

the aerosol formation temperature was 78°C;

the hydrolysis time was 56 seconds and the molar ratio $H_2O$/aluminium sec. butoxide was 15.

The resulting product was subjected to the treatment of Example 1, but employing a temperature of 1450°C and a time of 5 seconds.

The product obtained, subjected to X-ray analysis, was found to be alpha-alumina having the following characteristics:

—dn=1.20 µm;

—polydispersion index dw/dn=1.17;

the form being that of spherical and non-aggregated particles.

## Example 7

Example 6 was repeated by conducting the thermal treatment at T=1250°C during a time of 90 seconds. The product consisted essentially of alpha-alumina and exhibited morphological and granulometric characteristics similar to those of Example 6.

## Example 8
## Preparation of the precursor

A solution of $Al_2(SO_4)_3$ at a concentration of $2.10^{-3}$ moles/l of Al was aged for one week at 98°C until 2 g of $Al_2O_3 \cdot 3H_2O$ were obtained.

The pH value of the starting solution was about 4; after aging, the solution pH value was about 3.

The product so obtained was in the form of spherical, non-aggregated, monodispersed particles having a dn=0.55 µm and a polydispersion index dw/dn=1.14.

## Preparation of alpha-alumina

The product obtained as described hereinbefore was subjected to the thermal treatment of Example 1.

On analysis, the product was found to be alpha-alumina and consisted essentially of spherical, monodispersed, non-aggregated particles having a dn=0.45 µm and a polydispersion index dw/dn=1.14. The apparent density of the particles was 3.90 g/cm³.

## Claims

1. Alpha-alumina consisting essentially of solid, spherical, non-aggregated particles, characterized by having a number average diameter from 0.06 to 2 µm, a polydispersion index dw/dn less than or equal to 2.0 wherein dw is the weight avarage diameter and dn is the number average diameter, a total porosity of micro/meso type of less than 0.3 cc/g, a specific surface area from 0.7 to 80 m²/g, and an apparent density of the particles of from 3.2 to 3.94 g/cm³.

2. Alpha-alumina particles as claimed in claim 1, characterized in that the number average diameter is from 0.1 to 1 µm and the polydispersion index is less than or equal to 1.30.

3. Alpha-alumina particles as claimed in claim 2, characterized in that the number average diameter is from 0.2 to 0.6 µm and the polydispersion index is less than or equal to 1.20.

4. Alpha-alumina particles as claimed in any of claims 1 to 3, characterized in that the said porosity is less than 0.1 cc/g.

5. Alpha-alumina particles as claimed in claim 4, characterized in that the said porosity has a value of about zero.

6. Alpha-alumina as claimed in any of claims 1 to 5, in admixture with delta- and/or teta-alumina, characterized in that the alpha-alumina content is at least 70% by weight.

7. A process for preparing alpha-alumina particles according to claim 1, characterized in that an alpha-alumina precursor having a water content of from about 2% to about 35% by weight, in the form of spherical, non-aggregated particles, having a polydispersion index less than or equal to 2.0, and a number average diameter of from 0.07 to 2.3 µm, is subjected to a thermal treatment by instantaneously bringing the precursor from an initial temperature comprised from room temperature to 850°C to a thermal treatment temperature comprised from 1130° to 1700°C, and for a time sufficient to convert the precursor to the alpha phase, but not such as to cause disgregation and/or aggregation of the product; and bringing the resulting product again to room temperature by means of a non-instantaneous cooling of the order of at least 10 seconds.

8. A process as claimed in claim 7, characterized in that the said thermal treatment time is indicated for each temperature in Figure 1 of the accompanying drawings between straight lines a) and b) thereof.

9. A process as cliamed in claim 7 or 8, characterized in that a precursor consisting of hydrated alumina, having a number average diameter of 0.37 µm, is subjected to thermal treatment for times from 7 to 10 minutes for T of 1150°C, and from 12 to 18 seconds for T of 1350°C.

10. A process as claimed in claim 7 or 8, characterized in that a precursor consisting of hydrated alumina, having a number average diameter of 0.15 µm, is subjected to thermal treatment for times from 6 to 8.5 minutes for T of 1150°C, and from 8 to 15 seconds for T of 1350°C.

11. A process as claimed in claim 7 or 8, characterized in that a precursor consisting of gamma-alumina ($H_2O$ content of about 2% by weight) having a number average diameter of 0.28 µm is subjected to thermal treatment for times from 8 to 13 seconds for T of 1350°C and from 1 to 2 seconds for T of 1450°C.

12. A process for preparing alpha-alumina mixtures with delta- and/or teta-alumina with an alpha- content of at least 70% by weight according to claim 7, characterized in that the treatment time is not sufficient for the complete conversion of the precursor to alpha-alumina.

13. A process as claimed in claim 12, characterized in that the said thermal treatment time is indicated for each temperature in Figure 1 of the accompanying drawings between straight lines b) and c) and between straight lines a) and b) thereof.

## Patentansprüche

1. Alpha-Aluminiumoxid, im wesentlichen bestehend aus festen kugelförmigen nicht-aggregierten Teilchen, gekennzeichnet durch ein Zahlenmittel des Durchmessers von 0,06 bis 2 µm, einen Polydispersionsindex dw/dn kleiner oder gleich 2,0, wobei dw das Gewichtsmittel und dn das Zahlenmittel des Durchmessers sind, eine Gesamtporosität von weniger als 0,3 cm$^3$/g, eine spezifische Oberfläche von 0,7 bis 80 m$^2$/g und eine Schüttdichte der Teilchen von 3,2 bis 3,94 g/cm$^3$.

2. Alpha-Aluminiumoxidteilchen nach Anspruch 1, dadurch gekennzeichnet, daß das Zahlenmittel des Durchmessers 0,1 bis 1 µm und der Polydispersionsindex weniger oder gleich 1,30 betragen.

3. Alpha-Aluminiumoxidteilchen nach Anspruch 2, dadurch gekennzeichnet, daß das Zahlenmittel des Durchmessers 0,2 bis 0,6 µm und der Polydispersionsindex weniger oder gleich 1,20 betragen.

4. Alpha-Aluminiumoxidteilchen nach irgendeinem der Ansprüche 1 bis 3, dadurch gekennzeichnet, daß die Porosität weniger als 0,1 cm$^3$/g beträgt.

5. Alpha-Aluminiumoxidteilchen nach Anspruch 4, dadurch gekennzeichnet, daß die Porosität einen Wert von etwa Null hat.

6. Alpha-Aluminiumoxid nach irgendeinem der Ansprüche 1 bis 5 in Mischung mit delta- und/oder teta-Aluminiumoxid, dadurch gekennzeichnet, daß der alpha-Aluminiumgehalt mindestens 70 Gewichtsprozent beträgt.

7. Verfahren zur Herstellung von alpha-Aluminiumteilchen nach Anspruch 1, dadurch gekennzeichnet, daß man eine alpha-Aluminiumoxidvorstufe mit einem Wassergehalt von etwa 2 bis etwa 35 Gewichtsprozent in Form von kugelförmigen nicht-aggregierten Teilchen mit einem Polydispersionsindex kleiner oder gleich 2,0 und einem Zahlenmittel des Durchmessers von 0,07 bis 2,3 µm einer Wärmebehandlung unterzieht, indem die Vorstufe sofort von einer Anfangstemperatur im Bereich von Raumtemperatur bis 850°C auf eine Wärmebehandlungstemperatur im Bereich von 1130 bis 1700°C bringt und zwar ausreichend lange, um die Vorstufe in die alpha-Phase umzuwandeln, jedoch nicht derart, daß eine Disaggregation und/oder Aggregation des Produkts erfolgt; und das erhaltene Produkt durch nicht-sofortiges Abkühlen in der Größenordnung von mindestens 10 Sekunden wider auf Raumtemperatur bringt.

8. Verfahren nach Anspruch 7, dadurch gekennzeichnet, daß die Wärmebehandlungsdauer für jede Temperatur in Fig. 1 der Zeichnung zwischen den geraden Linien a) und b) angegeben ist.

9. Verfahren nach Anspruch 7 oder 8, dadurch gekennzeichnet, daß eine aus hydratisiertem Aluminiumoxid bestehende Vorstufe mit einem Zahlenmittel des Durchmessers von 0,37 µm einer Wärmebehandlung von 7 bis 10 Minuten für T 1150°C und von 12 bis 18 Sekunden für T 1350°C unterzogen wird.

10. Verfahren nach Anspruch 7 oder 8, dadurch gekennzeichnet, daß eine aus hydratisiertem Aluminiumoxid bestehende Vorstufe mit einem Zahlenmittel des Durchmessers von 0,15 µm einer Wärmebehandlung von 6 bis 8,5 Minuten für T 1150°C und von 8 bis 15 Sekunden für T 1350°C unterzogen wird.

11. Verfahren nach Anspruch 7 oder 8, dadurch gekennzeichnet, daß eine aus gamma-Aluminiumoxid (Wassergehalt etwa 2 Gewichtsprozent) bestehende Vorstufe mit einem Zahlenmittel des Durchmessers von 0,28 µm einer Wärmebehandlung von 8 bis 13 Sekunden für T 1350°C und von 1 bis 2 Sekunden für T 1450°C unterzogen wird.

12. Verfahren zur Herstellung von alpha-Aluminiumoxid-Mischungen mit delta- und/oder teta-Aluminiumoxid mit einem alpha-Gehalt von mindestens 70 Gewichtsprozent nach Anspruch 7, dadurch gekennzeichnet, daß die Behandlungszeit nicht ausreichend ist für eine vollständige Umwandlung der Vorstufe in alpha-Aluminiumoxid.

13. Verfahren nach Anspruch 12, dadurch gekennzeichnet, daß die Wärmebehandlungsdauer für jede Temperatur in Fig. 1 der Zeichnung zwischen den geraden Linien b) und c) und zwischen den geraden Linien a) und b) angegeben ist.

## Revendications

1. Alpha-alumine consistant essentiellement en particules solides, sphériques, non agrégées, caractérisée en ce que ces particules ont un diamètre moyen de l'ordre de 0,06 à 2 µm, un indice de polydispersion dw/dn inférieur ou égal à 2,0, où dw est le diamètre moyen rapporté à l'unité de masse et dn est le diamètre moyen vrai, une porosité totale de type micro/méso inférieure à 0,3 cc/g, une surface spécifique de l'ordre de 0,7 à 80 m$^2$/g, et une densité apparente de particules de l'ordre de 3,1 à 3,94 g/cm$^3$.

2. Particules d'alpha-alumine selon la revendication 1, caractérisées en ce que leur diamètre moyen est de l'ordre de 0,1 à 1 µm et que l'indice de polydispersion est inférieur ou égal à 1,30.

3. Particules d'alpha-alumine selon la revendication 2, caractérisées en ce que leur diamètre moyen est de l'ordre de 0,2 à 0,6 µm et que l'indice de polydispersion est inférieur ou égal à 1,20.

4. Particules d'alpha-alumine selon l'une quelconque des revendications 1 à 3, caractérisées en ce que ladite porosité est inférieure à 0,1 cc/g.

5. Particules d'alpha-alumine selon la revendication 4, caractérisées en ce que ladite porosité a une valeur environ égale à zéro.

6. Alpha-alumine selon l'une quelconque des revendications 1 à 5, mélangée avec de la delta- et/ou thêta-alumine, caractérisée en ce que la teneur en alpha-alumine est d'au moins 70% en poids.

7. Un procédé de préparation de particules d'alpha-alumine selon la revendication 1, caractérisé en ce qu'un précurseur d'alpha-alumine ayant une teneur en eau de l'ordre d'environ 2% à environ 35% en poids, sous forme de particules sphériques, non agrégées, ayant un indice de polydispersion inférieur ou égal à 2,0, et un diamètre moyen de l'ordre de 0,07 à 2,3 μm, est soumis à un traitement thermique en portant instantanément le précurseur d'une température initiale comprise entre la température ambiante et 850°C à une température de traitement thermique comprise entre 1130°C et 1700°C, et pendant une durée suffisante pour convertir le précurseur en phase alpha, mais pas assez pour provoquer la désagrégation et/ou l'agrégation du produit; et en portant le produit résultant à nouveau à température ambiante au moyen d'un refroidissement non instantané pendant environ au moins 10 secondes.

8. Un procédé selon la revendication 7, caractérisé en ce que ladite durée du traitement thermique est donnée pour chaque température sur la figure 1 entre les droites (a) et (b) y figurant.

9. Un procédé selon la revendication 7 ou 8, caractérisé en ce qu'un précurseur consistant en alumine hydratée, ayant un diamètre moyen de 0,37 μm, est soumis à traitement thermique pendant une durée de 7 à 10 minutes pour une température de 1150°C, et entre 12 et 18 secondes pour une température de 1350°C.

10. Un procédé selon la revendication 7 ou 8, caractérisé en ce qu'un précurseur consistant en alumine hydratée, ayant un diamètre moyen de 0,15 μm, est soumis au traitement thermique pendant une durée de 6 à 8,5 minutes pour une température de 1150°C, et entre 8 et 15 secondes pour une température de 1350°C.

11. Un procédé selon la revendication 7 ou 8, caractérisé en ce qu'un précurseur consistant en gamma-alumine (teneur en $H_2O$ d'environ 2% en poids), ayant un diamètre moyen de 0,28 μm, est soumis à traitement thermique pendant 8 à 13 secondes pour une température de 1350°C et de 1 à 2 secondes pour une température de 1450°C.

12. Un procédé de préparation de mélanges d'alpha-alumine avec de la delta- et/ou thêta-alumine avec une teneur en alpha-alumine d'au moins 70% en poids selon la revendication 7, caractérisé en ce que la durée de traitement n'est pas suffisante pour la conversion complète du précurseur en alpha-alumine.

13. Un procédé selon la revendication 12, caractérisé en ce que ladite durée du traitement thermique est donnée pour chaque température sur la figure 1 entre les droites (b) et (c) et entre les droites (a) et (b) y figurant.

Fig.1.

Fig. 2

1 μm

Fig. 3

1 μm

Fig. 4

1 μm

Fig. 5

1 μm

Fig. 6

1 μm

Fig. 7

1 μm

4

EP 0 188 388 B1

Fig. 8

5